# EUROPÄISCHE PATENTSCHRIFT

(11) **EP 2 070 184 B1**
(45) Veröffentlichungstag und Bekanntmachung des Hinweises auf die Patenterteilung: **24.03.2010**
(21) Anmeldenummer: 06804802.4
(22) Anmeldetag: 06.10.2006
(51) Int. Cl.: H02M 7/757, H02P 27/06, H02M 5/458, H02M 7/515

(54) **VERFAHREN UND SCHALTUNGSANORDNUNG ZUR RÜCKFÜHRUNG DER KOMMUTIERUNGSENERGIE BEI DREHSTROMMOTORANTRIEBEN MIT STROMZWISCHENKREISUMRICHTER**
METHOD AND SWITCHING ARRANGEMENT FOR THE FEEDBACK OF COMMUTATION ENERGY OF THREE-PHASE CURRENT MOTOR DRIVE SYSTEMS WITH A DC-LINK CURRENT INVERTER
PROCÉDÉ ET ENSEMBLE CIRCUIT POUR RÉINJECTER L'ÉNERGIE DE COMMUTATION DANS DES COMMANDES À MOTEUR TRIPHASÉ AU MOYEN DE CONVERTISSEURS DE CIRCUIT DE COURANT INTERMÉDIAIRE

(43) Veröffentlichungstag der Anmeldung: 17.06.2009
(73) Patentinhaber: Econodrives GmbH, 3662 Seftigen (CH)
(72) Erfinder: KANYÓ, Pal, 3127 Mühlethurnen (CH)
(74) Vertreter: AMMANN PATENTANWÄLTE AG BERN
(86) Internationale Anmeldenummer: PCT/CH2006/000565
(87) Internationale Veröffentlichungsnummer: WO 2008/040131

(56) Entgegenhaltungen:
- WO-A-96/08072
- JP-A- 55 127 887
- JP-A- 57 059 479

## Beschreibung

Die Erfindung betrifft ein Verfahren und eine Schaltungsanordnung zur Rückführung der Kommutations-Energie bei Drehstrommotor-Antrieben mit Stromzwischenkreis-Umrichter.

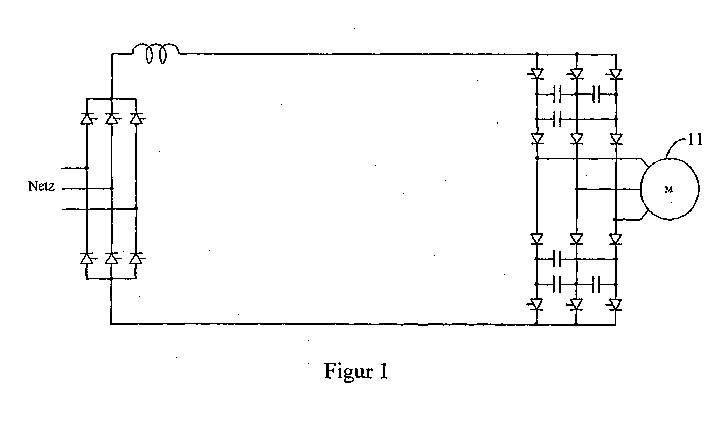

In praktischen Anwendungen für Stromzwischenkreis-Umrichter ist heute fast ausnahmslos der so genannte Phasenfolge-Wechselrichter (K. P. Philips, "Current Source Converter for AC Motor Drives," IEEE Trans. Ind Appl., Vol. IA-6, pp. 679-683 Nov/Dec. 1972) verwendet, Figur 1.

Bei einem Phasenfolge-Wechselrichter sind die Kommutierungs-Kondensatoren an die Streuinduktivität von dem verwendeten Motor angepasst. Deshalb ist es sehr problematisch mit einem Phasenfolge-Wechselrichter verschiedene Motoren mit verschiedenen Streuinduktivitäten anzutreiben.

Ziel der vorliegenden Erfindung ist es, diesen Nachteil mit einer kostengünstigen Lösung zu vermeiden. Dies wird erreicht mit dem Verfahren gemäss Anspruch 1 bzw. der Schaltungsanordnung gemäss Anspruch 3.

Der Wechselrichter beinhaltet keine Kommutierungs-Kondensatoren. Erfindungsgemäß wird die Kommutations-Energie direkt in den Stromzwischenkreis geführt.

Die Kommutations-Energie wird vorübergehend vorzugsweise in einer Zwischenkreisdrossel gespeichert und, bei der darauf folgenden Kommutierung in dem Wechselrichter, schwingt diese Energie in einen Kommutierungs-Kondensator zurück (Kommutations-Blindleistung).

Die Erfindung ist vorteilhaft verwendbar bei Drehstrommotor-Antrieben, wo Netzrückspeisung und/oder eine einfache, geberlose Positionierung mit Synchron-Motoren erwünscht ist.
Aufzugstechnik ist ein typischer Anwendungsbereich für solche Antriebe.

Anhand eines Ausführungsbeispiels wird die Erfindung mit Hilfe von Figuren erläutert. Es zeigen:
- Figur 1:: Der klassische Phasenfolge-Wechselrichter.
- Figur 2:: Ausführungsbeispiel von einer Schaltungsanordnung zur Realisierung der Erfindung.
- Figur 3:: Ein weiteres Ausführungsbeispiel.
- Figur 4:: Erklärungszeichnungen zum Ausführungsbeispiel gemäß Figur 2.

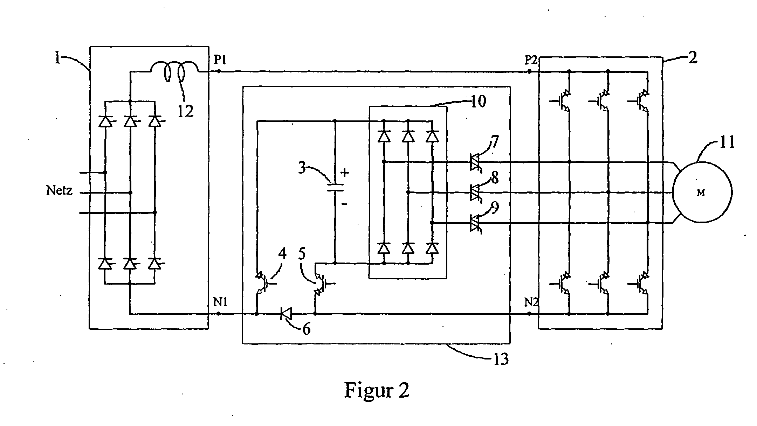

Figur 2 zeigt eine typische Schaltung zur Realisierung des in Patentanspruch 1 beschriebenen Verfahrens.

Die abgebildete RIGBT Bauteile, 4 und 5, symbolisieren ein von der Gate-Elektrode ein-und ausschalbares, rückwärtssperrendes Bauteil.
Nach Stand der Technik ist dieses Bauteil entweder
- ein rückwertssperrender IGBT (RIGBT) oder
- ein IGBT mit, in Serie geschalteter, Diode oder
- ein GTO Thyristor.

Aufbau der Schaltung gemäß Figur 2:
Die Stromquelle 1 und der Wechselrichter 2 :
   Ein am AC Netz geschalteter; netzgeführter Stromrichter bildet mit der Zwischenkreisdrossel 12 die Stromquelle 1. Der positive Stromquellen-Anschluss P1 ist mit dem positiven Wechselrichter-Anschluss P2 verbunden, der Drehstrommotor 11 ist an die motorseitigen Ausgänge des Wechselrichters 2 angeschlossen.
Die Kommutierungs-Einheit 13 :
   Die drei motorseitigen Ausgänge des Wechselrichters 2 sind in der Reihe nach durch die Triac 7, 8, 9 Bauteile mit den drei mittleren Anschlüssen der Dioden-Brücke 10 verbunden.
   Die gemeinsame Kathode der drei oberen Dioden der Dioden-Brücke 10 ist mit dem positiven Anschluss des Kommutierungs-Kondensators 3 verbunden, die gemeinsame Anode der drei unteren Dioden der Dioden-Brücke 10 ist mit dem negativen Anschluss des Kommutierungs-Kondensators 3 verbunden.
   Der positive Anschluss des Kommutierungs-Kondensators 3 ist mit dem Kollektor des ersten RIGBT 4 verbunden, der negative Anschluss ist mit dem Emitter des zweiten RIGBT 5 verbunden, der Emitter des ersten RIGBT 4 ist an die Kathode der Diode 6 angeschlossen und der Kollektor des zweiten RIGBT 5 ist an die Anode der Diode 6 angeschlossen; die Diode 6 ist in der negativen Stromschiene in Serie geschaltet, die Kathode ist mit dem negativen Stromquellen-Anschluss N1 und die Anode ist mit dem negativen Wechselrichter - Anschluss N2 verbunden.

Funktion der Schaltung gemäß Figur 2:

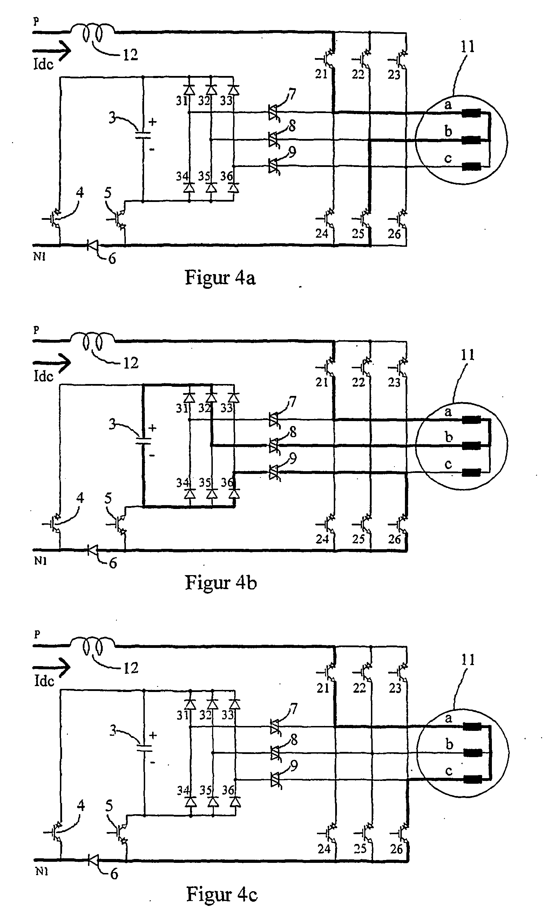

Die Figuren 4a bis 4e zeigen die verschiedene Phasen einer vollständigen Wechselrichter-Kommutierung.
**Figur 4a** zeigt die Verhältnisse vor der Kommutation. Der Strom fließt durch die Motorphasen a und b.

Die Wechselrichter-Kommutierung wird eingeleitet mit gleichzeitigem Einschalten von RIGBT 26, Ausschalten von RIGBT 25, Zündung von Triac 8 und Triac 9.
Nach **Figur 4b** fliesst der Strom jetzt durch den Kommutierungs-Kondensator 3, welcher die Kommutations-Energie aufnimmt.

Der Strom in der Motorphase b nimmt ab und der Strom in der Motorphase c steigt. Der Kommutierungs-Kondensator 3 wird aufgeladen. Der Vorgang wird beendet durch die Dioden 32 und 36 sowie Triac 8 und Triac 9, sobald der Strom in der Motorphase b Null erreicht. Die Kommutierungs-Energie ist jetzt in dem Kommutierungs-Kondensator 3 gespeichert. (**Figur 4c**)

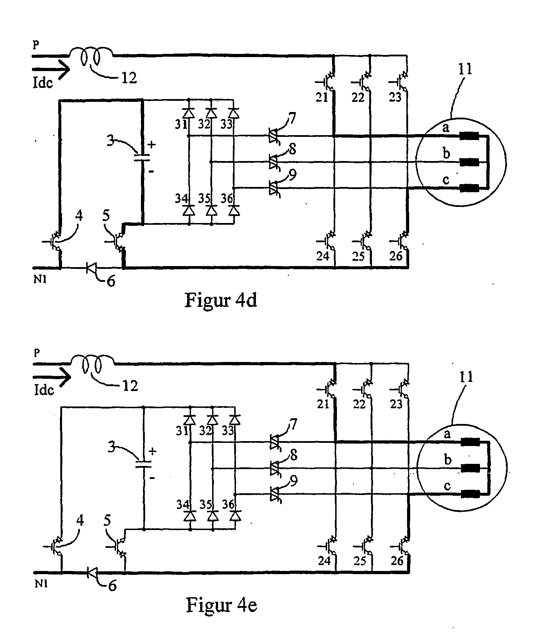

RIGBT 4 und RIGBT 5 werden gleichzeitig eingeschaltet. Der Zwischenkreisstrom fliesst durch den Kommutierungs-Kondensator 3 und entlädt ihn. Die Zwischenkreisdrossel 12 nimmt die Kommutations-Energie auf. (**Figur 4d**)

Erreicht die Spannung des Kommutierungs-Kondensators 3 wieder ihren ursprünglichen Wert, werden RIGBT 4 und RIGBT 5 gleichzeitig ausgeschaltet.
Der Kommutierungs-Vorgang zwischen den Motorphasen b und c ist beendet, die Schaltung ist bereit für die darauf folgende Kommutation. (**Figur 4e**)

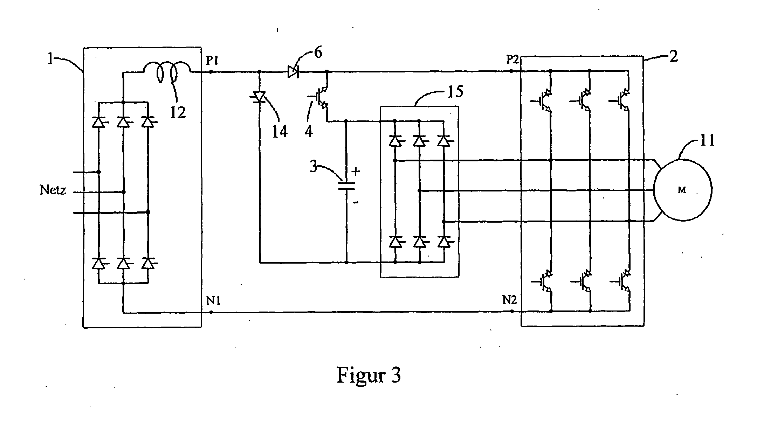

Figur 3 zeigt ein weiteres Ausführungsbeispiel zur Realisierung des in Patentanspruch 1 beschriebenen Verfahrens.

Bei dieser Schaltung wird, anstatt eines RIGBT der Thyristor 14 verwendet. Die Thyristor-Brücke 15 übernimmt die Funktion der drei Triacs, 7,8,9 und der Dioden-Brücke 10.

## Patentansprüche

1. Verfahren zur Rückführung der Kommutierungs-Energie bei Drehstrom-Antrieben mit Stromzwischenkreis-Umrichter, welcher Umrichter eine Stromquelle (1), einen Wechselrichter (2) und eine Kommutierungs-Einheit (13) beinhaltet, ***gekennzeichnet durch*** die beiden folgenden Schritte,
- in einem ersten Schritt, während einer ersten Wechselrichter-Kommutierung, wird die entstandene Kommutierungs-Energie in einem Kommutierungs-Kondensator (3), zweckmäßig **durch** eine, teilweise oder ganz mit steuerbaren Halbleitern aufgebaute und an die drei motorseitigen Wechselrichter-Ausgänge geschaltete, Gleichrichter-Schaltung (7, 8, 9, 10), gespeichert, und
- in einem zweiten Schritt, nach Abschluss der ersten Wechselrichter-Kommutierung und vor dem Beginn der darauf folgenden Wechselrichter-Kommutierung, wird, mit Hilfe von zwei steuerbaren Halbleitern (4,5,14) und einer im Stromzwischenkreis in Serie geschalteten Diode (6), die Kommutierungs-Energie vom Kommutierung-Kondensator (3) direkt in den Stromzwischenkreis geleitet, so dass der Zwischenkreisstrom nur für eine kontrollierte Zeit **durch** den Kommutierungs-Kondensator (3) fliesst.

2. Verfahren nach Anspruch 1, wobei der jeweilige steuerbare Halbleiter ein RIGBT (4, 5), ein IGBT mit in Serie geschalteter Diode oder ein Thyristor (14), insbesondere ein GTO Thyristor ist.

3. Schaltungsanordnung zur Rückführung der Kommutations-Energie bei Drehstrom-Antrieben, mit Stromzwischenkreis-Umrichter, der eine Stromquelle (1), einen Wechselrichter (2) und eine Kommutierungs-Einheit (13) beinhaltet, **dadurch gekennzeichnet, dass** die Schaltungsanordnung weiter umfasst:
einen Kommutierungs-Kondensator (3) zum Speichern der in einer Wechselrichtung-Kommutierung entstehenden Kommutierungs-Energie, und
zum Einleiten der gespeicherten Kommutierungs-Energie in den Stromzwischenkreis zwei steuerbare Halbleiter (4, 5, 14) sowie eine im Stromzwischenkreis in Serie geschaltete Diode (6).

4. Schaltungsanordnung nach Anspruch 3, wobei der jeweilige steuerbare Halbleiter ein RIGBT (4, 5), ein IGBT mit in Serie geschalteter Diode oder ein Thyristor (14), insbesondere ein GTO Thyristor ist.

5. Schaltungsanordnung gemäß Anspruch 4, ***dadurch gekennzeichnet,* dass** der positive Anschluss (+) des Kommutierungs-Kondensators (3) mit dem Kollektor des ersten RIGBT (4) verbunden ist, der negative Anschluss (-) mit dem Emitter des zweiten RIGBT (5) verbunden ist, der Emitter des ersten RIGBT (4) an der Kathode der Diode (6) angeschlossen ist und der Kollektor des zweiten RIGBT (5) an der Anode der Diode (6) angeschlossen ist und die Diode (6) in der negativen Stromschiene in Serie geschaltet ist, so dass die Kathode der Diode (6) mit dem negativen Stromquelle-Anschluss (N1) und die Anode der Diode (6) mit dein negativen Wechselrichter-Anschluss (N₂) verbunden ist.

6. Schaltungsanordnung gemäss Anspruch 4, ***dadurch gekennzeichnet,* dass** die Diode (6) in der positiven Stromschiene in Serie geschaltet ist, so dass die Anode der Diode (6) mit dem positiven Stromquelle-Anschluss (P₁) und die Kathode der Diode (6) mit dem positiven Wechselrichter-Anschluss (P₂) verbunden ist.

7. Shaltungsanordnung nach einem der Ansprüche 3 bis 6, mit einer Gleichrichterschaltung (7, 8, 9, 10), welche vorzugsweise an die drei motorseitigen Wechselrichter-Ausgänge geschaltet und/oder vorzugsweise teilweise oder ganz durch steuerbare Halbleiter aufgebaut ist.

7. Schaltungsanordnung gemäss Anspruch 7, ***dadurch gekennzeichnet*, dass** die Gleichrichter Schaltung eine dreiphasige Dioden-Brücke (10) beinhaltet und die gemeinsame Kathode der drei oberen Dioden der Dioden-Brücke (10) mit dem positiven Anschluss (+) des Kommutierungs-Kondensators verbunden ist, die gemeinsame Anode der drei unteren Dioden der Dioden-Brücke (10) mit dem negativen Anschluss (-) des Kommutierungs-Kondensators (3) verbunden ist, und die drei mittleren Anschlüsse der Dioden Brücke (10) durch je einen Triac (7,8,9) mit den drei motorseitigen Wechselrichter-Ausgängen verbunden sind.

9. Schaltungsanordnung gemäss Anspruch 7, ***dadurch gekennzeichnet,* dass** die Gleichrichter-Schaltung eine dreiphasige Thyristor-Brücke (15) mit sechs Thyristoren ist, wobei die gemeinsame Kathode der drei oberen Thyristoren mit dem positiven Anschluss des Kommutierungs-Kondensators (3) verbunden ist, die gemeinsame Anode der drei unteren Thyristoren mit dem negativen Anschluss des Kommutierungs-Kondensators (3) verbunden ist, und die drei mittleren Abschlüsse der Thyristor-Brücke (15) mit den drei motorseitigen Wechselrichter-Ausgängen verbunden sind.

## Claims

1. Method for the feedback of the commutation energy in three-phase current drive systems with a current intermediate circuit converter, which converter comprises a current source (1), an inverter (2), and a commutation unit (13), **characterised by** the following two steps,
- in a first step, during a first inverter commutation, the created commutation energy is stored in a commutation capacitor (3), suitably by a rectifier circuit (7, 8, 9, 10) that is partly or entirely built up of controllable semiconductors and connected to the three motor side inverter outputs, and
- in a second step, after the end of the first inverter commutation and before the beginning of the following inverter commutation, the commutation energy is directly fed from the commutation capacitor (3) to the current intermediate circuit by means of two controllable semiconductors (4, 5, 14) and a diode (6) connected in series in the current intermediate circuit so that the intermediate circuit current only flows through the commutation capacitor (3) for a controlled time.

2. Method according to claim 1, wherein the respective controllable semiconductor is an RIGBT (4, 5), an IGBT with a series connected diode, or a thyristor (14), more particularly a GTO thyristor.

3. Circuit arrangement for the feedback of the commutation energy in three-phase current drive systems, with a current intermediate circuit converter that comprises a current source (1), an inverter (2), and a commutation unit (13), **characterised in that** the circuit arrangement further comprises:
a commutation capacitor (3) for storing the commutation energy created during an inverter commutation, and
for feeding the stored commutation energy into the current intermediate circuit, two controllable semiconductors (4, 5, 14) as well as a diode (6) connected in series in the current intermediate circuit.

4. Circuit arrangement according to claim 3, wherein the respective controllable semiconductor is an RIGBT (4, 5), an IGBT with a series connected diode, or a thyristor (14), more particularly a GTO thyristor.

5. Circuit arrangement according to claim 4, **characterised in that** the positive terminal (+) of the commutation capacitor (3) is connected to the collector of the first RIGBT (4), the negative terminal (-) is connected to the emitter of the second RIGBT (5), the emitter of the first RIGBT (4) is connected to the cathode of the diode (6), and the collector of the second RIGBT (5) is connected to the anode of the diode (6), and **in that** the diode (6) is connected in series in the negative conductor line so that the cathode of the diode (6) is connected to the negative current source terminal (N1) and the anode of the diode (6) is connected to the negative inverter terminal (N2).

6. Circuit arrangement according to claim 4, **characterised in that** the diode (6) is connected in series in the positive conductor line so that the anode of the diode (6) is connected to the positive current source terminal (P1) and the cathode of the diode (6) is connected to the positive inverter terminal (P2).

7. Circuit arrangement according to one of claims 3 to 6, comprising a rectifier circuit (7, 8, 9, 10) that is preferably connected to the three motor side inverter outputs and/or preferably partly or entirely built up of controllable semiconductors.

8. Circuit arrangement according to claim 7, **characterised in that** the rectifier circuit comprises a three-phase diode bridge (10) and the common cathode of the three upper diodes of the diode bridge (10) is connected to the positive terminal (+) of the commutation capacitor (3), the common anode of the three lower diodes of the diode bridge (10) is connected to the negative terminal (-) of the commutation capacitor (3), and the three middle connections of the diode bridge (10) are connected to the three motor side inverter outputs by respective triacs (7, 8, 9).

9. Circuit arrangement according to claim 7, **characterised in that** the rectifier circuit is a three-phase thyristor bridge (15) including six thyristors, the common cathode of the three upper thyristors being connected to the positive terminal of the commutation capacitor (3), the common anode of the three lower thyristors being connected to the negative terminal of the commutation capacitor (3), and the three middle connections of the thyristor bridge (15) being connected to the three motor side inverter outputs.

## Revendications

1. Procédé pour la réinjection de l'énergie de commutation dans des entraînements à courant triphasé avec un convertisseur de circuit intermédiaire de courant, lequel convertisseur comprend une source de courant (1), un onduleur (2) et une unité de commutation (13), **caractérisé par** les deux étapes suivantes,
- dans une première étape, pendant une première commutation de l'onduleur, l'énergie de commutation créée est emmagasinée dans un condensateur de commutation (3), convenablement par un circuit redresseur (7, 8, 9, 10) partiellement ou entièrement constitué de semi-conducteurs commandables et connecté aux trois sorties du côté moteur de l'onduleur, et
- dans une deuxième étape, après la fin de la première commutation de l'onduleur et avant le début de la commutation suivante de l'onduleur, à l'aide de deux semi-conducteurs commandables (4, 5, 14) et d'une diode (6) montée en série dans le circuit intermédiaire de courant, l'énergie de commutation est directement conduite du condensateur de commutation (3) dans le circuit intermédiaire de courant de telle manière que le courant dans le circuit intermédiaire ne circule dans le condensateur de commutation (3) que pendant une durée contrôlée.

2. Procédé selon la revendication 1, où le semi-conducteur commandable respectif est un RIGBT (4, 5), un IGBT avec une diode montée en série ou un thyristor (14), en particulier un thyristor GTO.

3. Agencement de circuit pour la réinjection de l'énergie de commutation dans des entraînements à courant triphasé, avec un convertisseur de circuit intermédiaire de courant qui comprend une source de courant (1), un onduleur (2) et une unité de commutation (13), **caractérisé en ce que** l'agencement de circuit comprend en outre:
un condensateur de commutation (3) pour emmagasiner l'énergie de commutation créée au cours d'une commutation de l'onduleur, et
pour injecter dans le circuit intermédiaire de courant l'énergie de commutation emmagasinée, deux semi-conducteurs commandables (4, 5, 14) ainsi qu'une diode (6) montée en série dans le circuit intermédiaire de courant.

4. Agencement de circuit selon la revendication 3, où le semi-conducteur commandable respectif est un RIGBT (4, 5), un IGBT avec une diode montée en série ou un thyristor (14), en particulier un thyristor GTO.

5. Agencement de circuit selon la revendication 4, **caractérisé en ce que** la borne positive (+) du condensateur de commutation (3) est reliée au collecteur du premier RIGBT (4), la borne négative (-) est reliée à l'émetteur du deuxième RIGBT (5), l'émetteur du premier RIGBT (4) est relié à la cathode de la diode (6) et le collecteur du deuxième RIGBT (5) est relié à l'anode de la diode (6), et que la diode (6) est montée en série dans la ligne conductrice négative de telle manière que la cathode de la diode (6) est reliée à la borne négative (N1) de la source de courant et l'anode de la diode (6) à la borne négative (N2) de l'onduleur.

6. Agencement de circuit selon la revendication 4, **caractérisé en ce que** la diode (6) est montée en série dans la ligne conductrice positive de telle manière que l'anode de la diode (6) est reliée à la borne positive (P1) de la source de courant et la cathode de la diode (6) à la borne positive (P2) de l'onduleur.

7. Agencement de circuit selon l'une des revendications 3 à 6, comprenant un circuit redresseur (7, 8, 9, 10) lequel est préférablement connecté aux trois sorties du côté moteur de l'onduleur et/ou préférablement constitué partiellement ou entièrement de semi-conducteurs commandables.

8. Agencement de circuit selon la revendication 7, **caractérisé en ce que** le circuit redresseur comprend un pont triphasé à diodes (10) et la cathode commune des trois diodes supérieures du pont de diodes (10) est reliée à la borne positive (+) du condensateur de commutation (3), l'anode commune des trois diodes inférieures du pont de diodes (10) est reliée à la borne négative (-) du condensateur de commutation (3) et les trois connexions intermédiaires du pont de diodes (10) sont reliées par des triacs respectifs (7, 8, 9) aux trois sorties du côté moteur de l'onduleur.

9. Agencement de circuit selon la revendication 7, **caractérisé en ce que** le circuit redresseur est un pont triphasé à thyristors (15) comprenant six thyristors, la cathode commune des trois thyristors supérieurs étant reliée à la borne positive du condensateur de commutation (3), l'anode commune des trois thyristors inférieurs étant reliée à la borne négative du condensateur de commutation (3) et les trois connexions intermédiaires du pont à thyristors (15) étant reliées aux trois sorties du côté moteur de l'onduleur.
